# EUROPÄISCHE PATENTSCHRIFT

(11) **EP 0 864 347 B1**
(45) Veröffentlichungstag und Bekanntmachung des Hinweises auf die Patenterteilung: **15.01.2003**
(21) Anmeldenummer: 98102854.1
(22) Anmeldetag: 19.02.1998
(51) Int. Cl.: B01D 46/24, B01D 46/04, B01D 46/42

(54) **Verfahren und Vorrichtung zum Abreinigen von mit Staub- und Aerosolpartikeln beladenen Filter**
Process and apparatus for cleaning filters containing dust and aerosol particles
Procédé et dispositif pour purifier des filtres contenant des particules de poussières et d'aérosol

(30) Priorität: 13.03.1997 DE 19710431
(43) Veröffentlichungstag der Anmeldung: 16.09.1998
(73) Patentinhaber: Forschungszentrum Karlsruhe GmbH, 76133 Karlsruhe (DE)
(72) Erfinder: Leibold, Hans, 76316 Malsch (DE)

(56) Entgegenhaltungen:
- EP-A- 0 380 742
- DE-A- 2 540 003
- DE-A- 2 541 278

## Beschreibung

Die vorliegende Erfindung betrifft ein Verfahren zum Abreinigen von mit Staub- oder Aerosolpartikeln beladenen Filtern, die von einem heißen Gasstrom durchströmt werden und in einem geschlossenen oder offenen Gehäuse angeordnet sind, durch Aufbringen von schnellen Druckabsenkungen auf die staubbeladene Rohgasseite des Filters, z.B. zur Abreinigung von Filterelementen für hohe Temperaturen im Bereich von ca. 1000°C mit hohem Filterwiderstand.

Die Abreinigung von Filterelementen in Gehäusen oder anderen Behältern erfolgt zweckmässigerweise von der Rohgasseite her durch schnelle Druckabsenkung. Ein solches Verfahren ist aus der DE-OS 25 41 278 bekannt. Bei dem Verfahren werden jedoch zur Druckabsenkung mechanische Ventile benützt, mit denen die für eine ausreichend schnelle Druckabsenkung notwendige kurzzeitige Freigabe großer Querschnitte nicht erzielt werden kann. Eine reversible Druckentlastung großer Behältervolumina ist mit diesen mechanischen Schaltelementen nicht machbar. Darüberhinaus erfordert der Betrieb auf der Staubseite eines Filters sehr robuste und unempfindliche Einrichtungen, was bei mechanischen Schaltelementen unter den genannten Bedingungen generell problematisch ist.

Ferner wird in der EP 0 380 742 A1 eine Filteranordnung mit einem in einem Gehäuse oder Behälter untergebrachten Filterelement beschrieben, wobei das Gehäuse Ein- und Auslaßöffnungen für das Roh- und das Reingas aufweist und das Filterelement im Bereich zwischen diesen angeordnet ist. Rohgasseitig ist in das Gehäuse zudem eine Zweistoffdüse als Injektionsvorrichtung für Wasser mit Druckluftzerstäubung eingesetzt, welche sich jedoch nicht für die Abreinigung des Filterelements eignet. Die Filterreinigung erfolgt nämlich über eine reingasseitige Rückblaseeinrichtung.

Ausgehend von diesem Stand der Technik stellt sich für die vorliegende Erfindung die Aufgabe, ein Abreinigungsverfahren mit hohen Abreinigungskräften insbesondere für Filterelemente mit hohem Filterwiderstand bei hohen Temperaturen bis in die Bereiche um 1000°C anzugeben, mit welchem einzelne oder mehrfache, periodische Druckabsenkungen auf der Rohgasseite für eine wirksame Abreinigung erzielt werden können, ohne daß auf dieser Seite große Leitungsquerschnitte zwischen Volumina unterschiedlicher Drücke mittels besonderer Schaltelemente freigegeben werden müssen. Die Erfindung hat weiter die Aufgabe, eine zur Durchführung des Verfahrens geeignete Vorrichtung anzugeben.

Zur Lösung der Aufgabe schlägt die vorliegende Erfindung ein Verfahren vor, wie es im kennzeichnenden Teil des Hauptanspruches angegeben ist. Vorteilhafte Weiterbildungen des Verfahrens sind in den Merkmalen der Unteransprüche 2 bis 5 zu sehen. Eine erfindungsgemäße Vorrichtung für das Verfahren'ist in den Ansprüchen 6-8 angegeben.

Die Erfindung gibt somit ein Verfahren und eine dafür geeignete Vorrichtung an, mittels denen die gezielt schnelle Erzeugung eines Unterdruckes in einem geschlossenen oder auch offenen System, wie z.B. in großvolumigen Behältern ohne die Verwendung beweglicher Komponenten ermöglicht wird. Das Verfahren ist darüber hinaus auch in Druckbehältern, die unter einem hohen Prozeßdruck stehen unter Aufrechterhaltung desselben durchführbar.

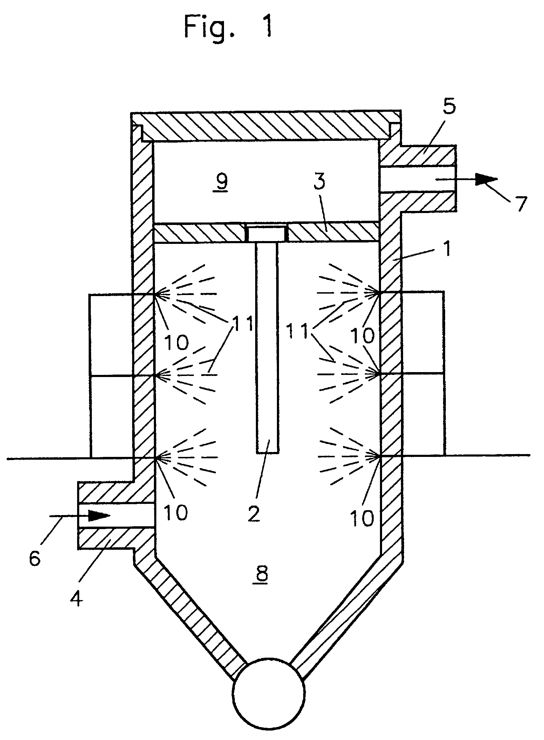

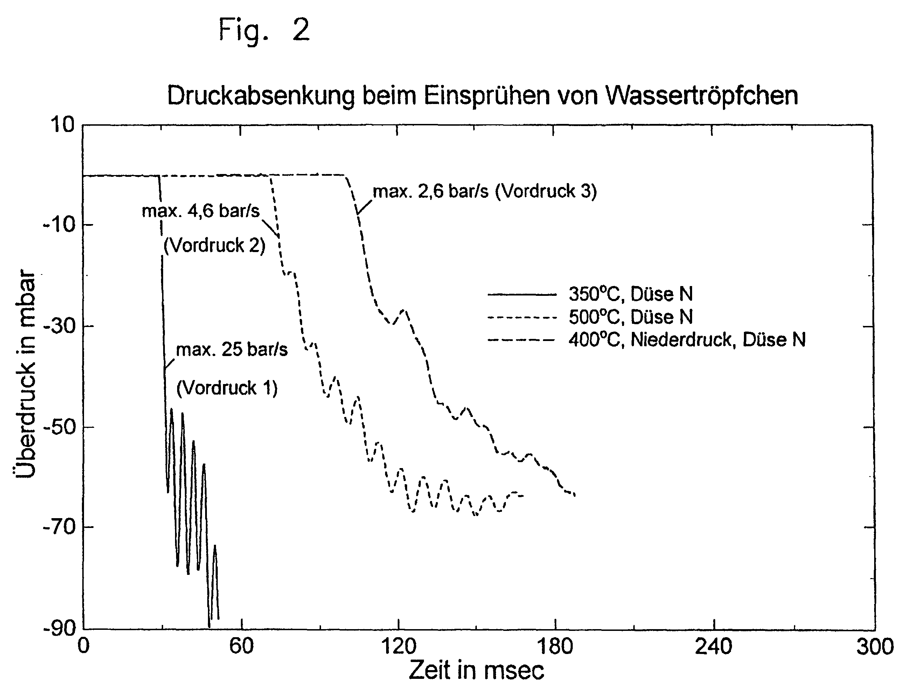

Weitere Einzelheiten werden im Folgenden und anhand der Figuren 1 und 2 näher erläutert. Es zeigen:
Die Fig. 1 schematisch einen Behälter für das Verfahren und
die Fig. 2 experimentell ermittelte Kurven des Druckabfalles vor der Filterfläche bei einem Verdampfungs- bzw. Abreinigungsvorgang.

Das neue Verfahren dient zum Abreinigen von mit Staub- oder Aerosolpartikeln beladenen Filterelementen, die in einem geschlossenen oder offenen Gehäuse oder einem Behälter beliebiger Größe untergebracht sind. Die Abreinigung erfolgt dabei durch das Aufbringen von schnellen Druckabsenkungen auf die Rohgasseite des Filters. Das Verfahren ist vor allem zur Abreinigung von Filterelementen für hohe Temperaturen bis in Bereiche um ca. 1000°C mit hohem Filterwiderstand vorgesehen, wie sie z.B. im Abgasstrang von Verbrennungsanlage eingesetzt werden. Die Druckabsenkung wird nun dadurch erzeugt, daß in den heißen Gasstrom vor der staubbeladenen Rohgasseite feine Tröpfchen einer Flüssigkeit, die bei den thermodynamischen Bedingungen am Filter im Gleichgewichtszustand dampfförmig ist, eingespritzt und dort durch die Wärme des Gasstromes zur Erzeugung des gewünschten Unterdruckes schlagartig adiabatisch verdampft werden, wobei die Menge der Füssigkeit so dosiert wird, daß der Taupunkt des Gases nicht unterschritten wird. Die Tröpfchengröße wird dabei durch die Einspritzbedingungen (Einspritzdruck, Düsenform und -anzahl usw.) eingestellt. Die Filterelemente können dabei Flächen- oder zylindrische Kerzenfilter sein, oder auch andersartige Formen wie sie Wabenkörper oder Filter mit tiefstrukturierten Filterflächen besitzen, aufweisen.

Das Wesentliche ist somit die spontane Absenkung des Druckes auf der staubbeladenen Rohgasseite des Filterelementes in einem Behälter oder in einem bestimmten Volumen eines Gehäuses, das bei hohen Temperaturen zur Aufnahme von Filterelementen eingesetzt wird. Vorteilhaft ist dabei, daß die Druckabsenkung nicht durch die Freigabe eines Querschnittes, sondern direkt innerhalb des Behälters erzeugt wird. Diese Absenkung wird innerhalb von Millisekunden durch das schlagartige Verdampfen der feinen Flüssigkeitströpfchen und die dadurch aufgebrachte Verdampfungsenthalpie erzeugt. Das Gas kühlt ab, zieht sich zusammen und bildet dadurch den gewünschten Unterdruck. Danach stellt die Wärme im Behälter wieder den alten Zustand her, wodurch der Einspritzvorgang auch mehrfach hintereinander in kurzen Abständen nach Maßgabe der Dauer der Druckabsenkung erfolgen kann. Die Flüssigkeit kann normalerweise aus Wasser bestehen, sofern die Verdampfungstemperaturen entsprechend hoch genug sind, jedoch können auch abhängig von den Prozeßbedingungen andere Flüssigkeiten, wie z.B. verflüssigtes CO₂ eingesetzt werden. Die zur vollständigen Verdampfung benötigte Energie wird aus dem heißen Prozeß- oder Rauchgas entnommen, das sich dadurch kurzzeitig abkühlt. Die damit verbundene Druckabsenkung bewirkt ein Druckgefälle über der Staubschicht und initiiert eine Strömung vom Filterelement weg. Die daraus resultierenden Kräfte führen zur Ablösung des Staubes, der an dem Filterelement anhaftet.

Eine so gezielt erzeugte schnelle Druckabsenkung ist damit in einem geschlossenen oder auch sogar offenen System oder in einem Druckbehälter unter hohem Betriebsdruck ohne die Verwendung beweglicher Komponenten möglich. Durch den Wegfall beweglicher Klappen oder Ventile kann die Druckabsenkung selbst in großen Behältern mit vielen Filtern unter hoher Geschwindigkeit erfolgen. Diese kann auch in kompliziert aufgebauten Behältern gleichförmig erreicht werden, da die Druckabsenkung direkt im Gasvolumen unabhängig von der Filterelementoberfläche erreicht wird. Die Druckabsenkung kann prinzipiell unabhängig von Entlastungsöffnungen, Expansionsbehältern oder gesonderten Rohrbehältern durchgeführt werden. Damit eignet sich das Verfahren besonders für druckbeaufschlagte Anlagen sowie für Anlagen, in denen mit toxischen, radioaktiven oder in sonstiger Weise problematischen Fluiden umgegangen wird. Dabei kann die Behälterform allein nach filtrationstechnischen Gesichtspunkten gestaltet werden, unabhängig vom Platzbedarf für Rückblaseinrichtungen oder andere Elemente.

In der Fig. 1 ist ein solcher Behälter schematisch dargestellt. Dabei ist in einem Gehäuse 1 ein Filterelement 2 in einer Zwischenwand 3 eingesetzt, wobei das Gehäuse Ein- und Auslaßöffnungen 4, 5 für die Gaszu- und Gasabfuhr des Roh- und des Reingases 6, 7 aufweist und das Filterelement 2 im Bereich zwischen diesen sitzt. Vor dem Filterelement 2 befindet sich im Gehäuse 1 der Rohgasbereich 8 und hinter ihm der Reingasbereich 9, jeweils in Durchströmungsrichtung gesehen. Im Inneren des Gehäuses 1 sind vor der Einlaßseite des Filterelementes 1 im Rohgasbereich 8 die Sprüheinrichtungen 10 zum Einsprühen der Flüssigkeitströpfchen 11 angeordnet, die beliebig im Raum oder wie dargestellt in Richtung des Filterelementes 2 gerichtet sind und die von außerhalb des Gehäuses 1 mit der Sprühflüssigkeit 11 versorgt werden. In der Fig. 1 ist als Beispiel ein kerzenförmiger Heißgasfilter dargestellt, wobei die Sprüheinrichtungen 10 gleichmäßig um den Heißgasfilter 2 herum angeordnet sind. Das Verfahren ist aber auch gleichermassen zur Abreinigung von Filtern mit Wabenkörpern oder andersartigen, tief strukturierten Filtern geeignet.

In der Fig. 2 sind drei experimentell ermittelte Kurven des Druckabfalles vor bzw. an der Filterfläche bei einem Verdampfungs- bzw. Abreinigungsvorgang dargestellt. Es ist die Druckabsenkung beim Einsprühen von Wassertröpfchen unter verschiedenen Vordrücken aufgezeigt. Die Fig. 2 zeigt dabei für das System Wasser/Luft und drei unterschiedliche Zerstäubungsbedingungen den erreichten Unterdruck. Die durchgezogene Kurve zeigt, daß in ungefähr 20 msec eine Druckabsenkung von 90 mbar erzielt wurde. Dieser Wert erwies sich als ausreichend für die Entfernung des auf einer Filterfläche abgeschiedenen Staubes. Weitere Werte können aus den gestrichelt dargestellten Kurven entnommen werden. Für die Abreinigung sind dabei noch die Druckabsenkungsraten wesentlich, die der Steigung entnommen werden können. Von ausschlaggebender Bedeutung bei dem neuen Verfahren ist, daß die Druckabsenkung dabei praktisch verzögerungsfrei erfolgt. Dadurch kann eine vorzeitige Rißbildung im Staubkuchen wirksam unterbunden werden.

## Patentansprüche

1. Verfahren zum Abreinigen von mit Staub- oder Aerosolpartikeln beladenen Filtern, die von einem heißen Gasstrom durchströmt werden und in einem geschlossenen oder offenen Gehäuse angeordnet sind, durch Aufbringen von schnellen Druckabsenkungen auf die staubbeladene Rohgasseite des Filters, z. B. zur Abreinigung von Filterelementen für hohe Temperaturen im Bereich von ca. 1000° C mit hohem Filterwiderstand, **dadurch gekennzeichnet,**
**daß** in den heißen Gasstrom vor der staubbeladenen Rohgasseite feine Tröpfchen einer Flüssigkeit, die bei den thermodynamischen Bedingungen am Filter im Gleichgewichtszustand dampfförmig ist, eingespritzt und dort durch die Wärme des Gasstromes zur Erzeugung des gewünschten Unterdruckes schlagartig adiabatisch verdampft werden, wobei die Menge der Füssigkeit so dosiert wird, daß der Taupunkt des Gases nicht unterschritten wird.

2. Verfahren nach Anspruch 1, **dadurch gekennzeichnet, daß** der Einspritzvorgang in kurzen Abständen mehrfach hintereinander nach Maßgabe der Dauer der Druckabsenkung erfolgt.

3. Verfahren nach Anspruch 1 oder 2, **dadurch gekennzeichnet, daß** die Flüssigkeit aus Wasser besteht.

4. Verfahren nach Anspruch 1 oder 2, **dadurch gekennzeichnet, daß** die Flüssigkeit aus verflüssigtem CO₂ besteht.

5. Verfahren nach einem der vorstehenden Ansprüche, **dadurch gekennzeichnet, daß** es unter dem Betriebsdruck eines Druckbehälters in diesem durchgeführt wird.

6. Vorrichtung zur Durchführung eines Verfahrens nach einem der vorstehenden Ansprüche mit einem in einem Gehäuse (1) oder Behälter untergebrachten Filterelement (2), wobei das Gehäuse (1) Ein- und Auslassöffnungen (4, 5) für das Rohund das Reingas (6, 7) aufweist, das Filterelement (2) im Bereich zwischen diesen angeordnet ist und im Inneren des Gehäuses (1) vor der Einlaßseite des Filterelementes (2) eine Injektionsvorrichtung eingesetzt ist, **dadurch gekennzeichnet,**
**daß** die Injektionsvorrichtung Sprüheinrichtungen (10) zum Einsprühen der Flüssigkeitströpfchen (11) sind, die beliebig im Raum oder in Richtung des Filterelementes (2) gerichtet sind und die .von außerhalb des Gehäuses (1) mit der Sprühflüssigkeit (11) versorgt werden.

7. Vorrichtung nach Anspruch 6 mit einem kerzenförmigen Heißgasfilter, **dadurch gekennzeichnet, daß** die Sprüheinrichtungen (10) gleichmäßig um den Heißgasfilter (2) herum angeordnet sind.

8. Vorrichtung nach Anspruch 6 zur Durchführung eines Verfahrens nach Anspruch 5, **dadurch gekennzeichnet, daß** das Gehäuse (1) aus einem Druckbehälter für höhere Prozeßdrücke in einem geschlossenen System besteht.

## Claims

1. Method of cleaning filters which are laden with dust or aerosol particles, said filters being traversed by a hot gas stream and being disposed in a closed or open housing, by applying rapid pressure drops to the dust-laden unfiltered gas side of the filter, e.g. to clean filter elements for high temperatures in the range of approx. 1000° C with a high filter resistance, **characterised in that** fine droplets of a fluid, which is vaporous under the thermodynamic conditions at the filter in the state of equilibrium, are injected into the hot gas stream upstream of the dust-laden unfiltered gas side and adiabatically evaporated there in sudden spurts by the heat of the gas stream to generate the desired reduced pressure, the quantity of fluid being so metered that temperatures do not fall below the condensation point of the gas.

2. Method according to claim 1, **characterised in that** the injection process is effected at short intervals repeatedly and consecutively in accordance with the duration of the pressure drop.

3. Method according to claim 1 or 2, **characterised in that** the fluid is formed from water.

4. Method according to claim 1 or 2, **characterised in that** the fluid is formed from liquefied CO₂.

5. Method according to one of the preceding claims, **characterised in that** it is accomplished in a pressure container under the operational pressure of said container.

6. Apparatus for accomplishing a method according to one of the preceding claims, having a filter element (2) which is accommodated in a housing (1) or container, the housing (1) including inlet and outlet apertures (4, 5) for the unfiltered and filtered gas (6, 7), the filter element (2) being disposed in the region between said apertures, and an injecting device being inserted in the interior of the housing (1) upstream of the inlet side of the filter element (2), **characterised in that** the injecting device comprises spraying means (10) for spraying-in the fluid droplets (11), which means are directed as desirable in the area or in the direction of the filter element (2) and are supplied with the spraying fluid (11) from externally of the housing (1).

7. Apparatus according to claim 6, provided with a tubular hot-gas filter, **characterised in that** the spraying means (10) are disposed uniformly around the hot-gas filter (2).

8. Apparatus according to claim 6 for accomplishing a method according to claim 5, **characterised in that** the housing (1) comprises a pressure container for higher process pressures in a closed system.

## Revendications

1. Procédé de nettoyage de filtres chargés de particules de poussières ou d'aérosol, ces filtres étant traversés par une veine de gaz chaud et installés dans un boîtier ouvert ou fermé, par l'application de diminution rapide de la pression du côté de gaz non filtrés, chargé de poussières du filtre,
par exemple pour nettoyer des éléments de filtres travaillant à des températures élevées dans une plage d'environ 1000°C, avec une résistance de filtre élevée,
**caractérisé en ce qu'**
on injecte dans la veine de gaz chaud, en amont du côté de gaz non filtrés, chargés de poussières, de fines gouttelettes d'un liquide qui est à l'état d'équilibre de vapeur dans les conditions thermodynamiques du filtre, et la chaleur de la veine de gaz vaporise de manière adiabatique, brutalement pour générer la dépression souhaitée, la quantité de liquide étant dosée pour ne pas descendre en dessous du point de rosée du gaz.

2. Procédé selon la revendication 1,
**caractérisé en ce que**
l'opération d'injection s'effectue à de brefs intervalles, plusieurs fois de manière successive selon la durée fixée pour la diminution de pression.

3. Procédé selon l'une quelconque des revendications 1 ou 2,
**caractérisé en ce que**
le liquide est de l'eau.

4. Procédé selon l'une quelconque des revendications 1 ou 2,
**caractérisé en ce que**
le liquide est du gaz carbonique liquéfié CO₂.

5. Procédé selon l'une quelconque des revendications précédentes,
**caractérisé en ce qu'**
il est effectué à la pression de fonctionnement d'un réservoir sous pression, dans celui-ci.

6. Dispositif pour la mise en oeuvre d'un procédé selon l'une quelconque des revendications précédentes, comportant un élément de filtre (2) logé dans un boîtier (1) ou dans un réservoir,
le boîtier (1) comportant des orifices d'entrée et de sortie (4, 5) pour le gaz non filtré et le gaz filtré (6, 7), l'élément de filtre (2) étant installé dans une zone intermédiaire et à l'intérieur du boîtier (1), en amont du côté d'entrée de l'élément de filtre (2), on place un dispositif d'injection,
**caractérisé en ce que**
le dispositif d'injection est constitué par des installations de pulvérisation (10) pour pulvériser des gouttelettes de liquide (11), ces dispositifs étant dirigés de manière quelconque dans l'espace ou en direction de l'élément de filtre (2) et alimentés de l'extérieur du boîtier (1) avec du liquide à pulvériser (11).

7. Dispositif selon la revendication 6, comportant un filtre à gaz chauds en forme de bougie,
**caractérisé en ce que**
l'installation de pulvérisation (10) est prévue régulièrement autour du filtre à gaz chauds (2).

8. Dispositif selon la revendication 6 pour la mise en oeuvre d'un procédé selon la revendication 5,
**caractérisé en ce que**
le boîtier (1) est formé d'un réservoir sous pression pour des pressions de procédé, élevées, dans un système fermé.
